# FASCICULE DE BREVET EUROPEEN

(11) **EP 0 522 888 B1**
(45) Date de publication et mention de la délivrance du brevet: **17.11.1994**
(21) Numéro de dépôt: 92400059.9
(22) Date de dépôt: 10.01.1992
(51) Int. Cl.: B61D 25/00, B60J 1/10

(54) **Vitrage, notamment pour fenêtre de véhicule ferroviaire ou routier**
Beglasung, insbesondere für Strassen oder Schienenfahrzeugfenster
Glass pane, especially for road or rail vehicle window

(30) Priorité: 12.07.1991 FR 9108833
(43) Date de publication de la demande: 13.01.1993
(73) Titulaire: Etablissements Georges Klein, F-75013 Paris (FR)
(72) Inventeur: Ulmann,Jean-Pierre, F-75017 Paris (FR)
(74) Mandataire: Picard, Jean-Claude Georges

(56) Documents cités:
- EP-A- 0 064 583
- EP-A- 0 100 558
- EP-A- 0 114 257
- EP-A- 0 144 620
- EP-A- 0 233 143
- EP-A- 0 268 815
- EP-A- 0 307 317
- WO-A-86/05541
- WO-A-91/08366

## Description

La présente invention concerne un vitrage, notamment pour fenêtre de véhicule ferroviaire ou routier, ce vitrage devant affleurer la surface extérieure de la structure dudit véhicule ou analogue selon le préambule de la revendication 1.

Pour des questions d'aérodynamisme, d'esthétique et de protection des tranches des découpures de faces, il est de plus en plus souvent demandé que la partie extérieure des fenêtres vitrées soit exactement dans le plan de la face du véhicule comme représenté dans EP-A-0 064 583.

Les solutions existantes consistent à coller les vitrages directement sur la structure de la voiture ou sur un intermédiaire métallique qui sera ensuite fixé sur la voiture.

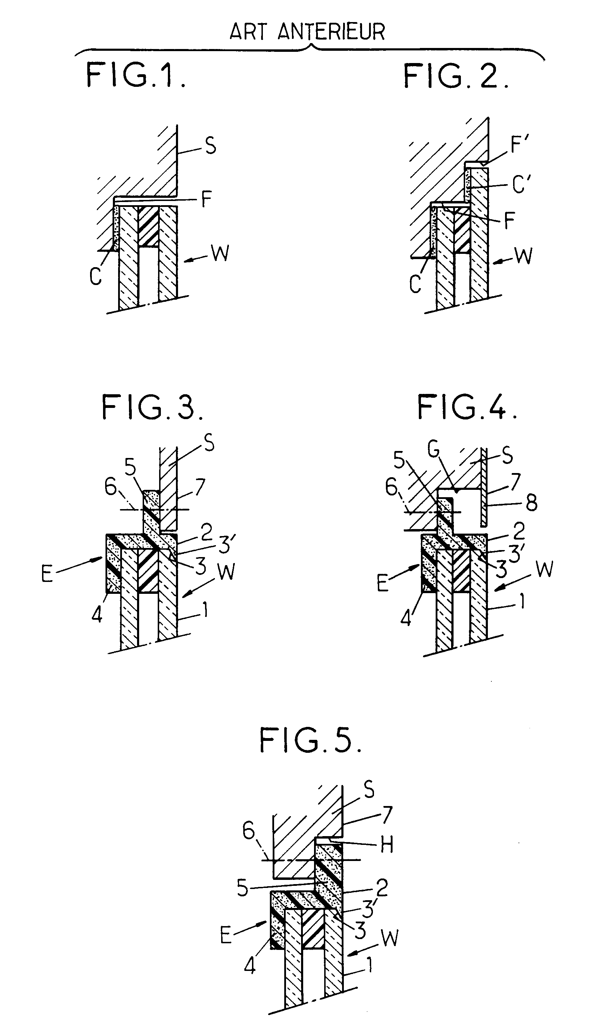

Dans le mode de réalisation connu représenté en coupe transversale partielle à la figure 1 des dessins ci-annexés, un double vitrage W est collé directement, en C, par le pourtour de sa face intérieure, dans la feuillure F de la structure S d'un véhicule. Dans le mode de réalisation également connu de la figure 2, la vitre extérieure du double vitrage W déborde sur la vitre intérieure, de sorte que le collage C, C′ peut s'effectuer dans une double feuillure F, F′ de la structure S du véhicule. Ces solutions sont difficiles à mettre en oeuvre et coûteuses. Dans les deux cas il n'y a pas de retenue mécanique suffisante ; en outre, un collage dépend essentiellement de la température, de l'hygrométrie et de la propreté du local où il est pratiqué, ce qui est souvent incompatible avec les ateliers courants, et de ce fait met en jeu la sécurité.

Il s'agit là de graves inconvénients, car la qualité de l'adhérence d'un vitrage à la structure d'un véhicule - notamment ferroviaire - est primordiale, la fenêtre étant soumise lors du roulement à des pressions et à des dépressions qui peuvent être très importantes.

Le but de la présente invention est de remédier à ces inconvénients de la technique antérieure et, à cet effet, un vitrage, notamment pour fenêtre de véhicule ferroviaire ou routier, conforme à l'invention, sera essentiellement caractérisé en ce qu'il comporte un entourage assujetti sur le pourtour dudit vitrage, la face extérieure de cet entourage affleurant la surface extérieure du vitrage, et en ce que cet entourage présente en outre un voile d'appui et de fixation à ladite structure, tel qu'après montage ladite face extérieure de cet entourage affleure également ladite surface extérieure de cette structure, et en ce que le vitrage comporte extérieurement sur tout son pourtour un chanfrein recouvert et maintenu par une partie rentrante dudit entourage, sans saillie vers l'extérieur.

Grâce à cette disposition générale, on peut faire abstraction, lors du montage de la fenêtre sur la structure du véhicule, des tolérances dimensionnelles habituellement importantes de la vitre, surtout lorsque celle-ci a une forme galbée.

On obtient ainsi une retenue mécanique extrêmement sûre sur toute la périphérie de la fenêtre.

A titre de variantes, on peut prévoir soit que la surface extérieure dudit voile est en affleurement avec la surface extérieure dudit vitrage, soit que ledit voile est en retrait par rapport à la surface extérieure dudit vitrage.

Un vitrage conforme à l'invention pourra encore se caractériser en ce que ledit entourage est réalisé en un matériau composite tel qu'un polyester, un acrylique ou une résine époxy phénolique, et en ce que ledit entourage est renforcé par des fibres de verre.

Ainsi la dilatation du composite et de la vitre pourront être pratiquement identiques en raison de la charge en verre du matériau composite.

Lorsque l'entourage est en matériau composite, il est possible de le surmouler directement sur le pourtour du vitrage, ce qui augmente la sûreté de la solidarisation entre ces deux parties, puisqu'il y a de ce fait une adhérisation de cet entourage sur le vitrage, et ceci sans aucun apport de colle ; on obtiendra toujours une parfaite adhérence de l'entourage composite surmoulé sur la vitre (vitre simple ou double vitrage).

A titre d'autre variante, un vitrage conforme à l'invention peut encore se caractériser en ce que ledit entourage, en matériau métallique, synthétique ou naturel, est constitué d'un cadre au moins partiellement préformé, ajusté sur ledit pourtour du vitrage.

Dans un premier mode de mise en oeuvre de cette autre variante, on peut prévoir que ledit entourage est constitué de deux demi-cadres dont la section transversale correspond, en creux, à la section transversale extérieure dudit pourtour du vitrage, ces deux demicadres étant adaptés à être engagés sur ledit pourtour du vitrage par coulissement, et à être ensuite solidarisés l'un de l'autre par des éclisses ou analogues.

Dans un second mode de mise en oeuvre, on peut prévoir que ledit entourage comporte une partie principale de cadre entourant d'un côté ledit pourtour du vitrage, et un rebord rapporté maintenant le vitrage en place du côté opposé et propre à être fixé, par des boulons, rivets ou analogues, sur ladite partie principale de cadre.

Quand cet entourage est en aluminium et quel que soit le mode de réalisation choisi, on peut le protéger avantageusement par oxydation anodique ou par peinture.

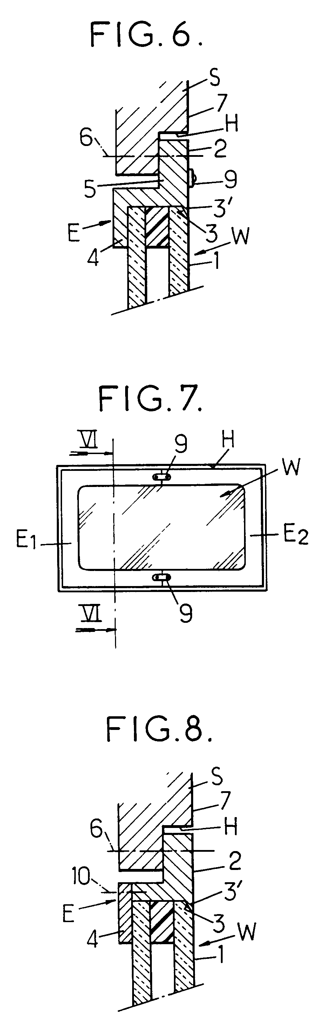

Ces différents modes d'exécution de l'invention vont maintenant être décrits à titre d'exemples nullement limitatifs, avec référence aux autres figures 3 à 8 du dessin ci-annexé, qui sont également des vues en coupe transversale partielle du vitrage, à l'exception de la figure 7, qui est une vue de face du vitrage de la figure 6, cette dernière étant une vue en coupe transversale par la ligne VI-VI de la figure 7.

Dans les différents modes de réalisation le double vitrage a été désigné W et sa surface extérieure a été référencée 1. L'entourage surmoulé et adhérisé sur tout le pourtour du double vitrage a été référencé E, et sa face extérieure a été référencée 2. Cette face extérieure 2 affleure la surface extérieure 1 du double vitrage.

La vitre extérieure du double vitrage W présente sur son pourtour un chanfrein 3 recouvert par une partie rentrante 3' de l'entourage E, dont un rebord arrière 4 s'appuie sur le bord de la vitre intérieure. On obtient ainsi une excellente retenue mécanique de la double vitre W dans l'entourage en forme de cadre E.

L'entourage E comporte en outre un voile 5 servant d'appui sur la structure S du véhicule, et grâce auquel l'ensemble double vitrage - entourage peut être assujetti sur le véhicule. Les moyens de fixation du voile 5 sur la structure S sont symbolisés en 6.

Dans le mode de réalisation de la figure 3, le voile 5 est en retrait par rapport à la surface extérieure 1 du double vitrage W d'une valeur correspondant à l'épaisseur de la structure S, de sorte que la face extérieure 2 de l'entourage E affleure la surface extérieure 7 de la structure S lorsque le double vitrage est monté à l'intérieur de la structure S. Ainsi les surfaces 1, 2 et 7 se trouvent parfaitement alignées, ce qui était le but recherché.

Dans le mode de réalisation de la figure 4, le voile 5 de l'entourage E est encore plus en retrait par rapport à la surface extérieure 1 du double vitrage W, ce qui permet un montage de celui-ci par l'extérieur, dans une feuillure G de la structure S du véhicule. Un habillage 8 fixé sur la structure S sert de cache pour les moyens de fixation 6 ; sa surface extérieure 7 affleure les surfaces extérieures 1 et 2 du double vitrage et de son entourage, de sorte que l'on obtient le même résultat que dans le cas précédent.

Dans le mode de réalisation de la figure 5, la surface extérieure du voile 5 est confondue avec la face extérieure 2 de l'entourage E. Le voile 5 peut ainsi être monté dans une feuillure H de la structure S, par l'extérieur, les moyens de fixation 6 étant situés alors à l'intérieur de la structure.

Là encore, on voit que la surface extérieure 7 de la structure est alignée avec les surfaces extérieures 1 et 2 du double vitrage W et de son entourage E.

Dans les modes de réalisation susdécrits avec référence aux figures 3 à 5, on a supposé que l'entourage E, en matériau composite éventuellement renforcé de fibres, avait été surmoulé directement sur la vitre W.

On peut toutefois procéder différemment, par un assemblage mécanique d'un entourage en deux parties, notamment quand il est en un matériau qu'il n'est pas possible de surmouler directement sur le verre. C'est le cas, par exemple, de l'entourage en aluminium qui a été représenté sur les figures 6 à 8.

Dans ces figures, on a adopté par ailleurs la même disposition générale que dans la figure 5 pour ce qui est du montage du vitrage sur la structure S du véhicule, mais il va de soi qu'un entourage non surmoulé, par exemple métallique, pourrait aussi bien être constitué selon la disposition générale des figures 3 ou 4.

Dans le mode de réalisation des figures 6 et 7, l'entourage en forme de cadre est constitué de deux parties E1 et E2 dont le profil en creux s'ajuste sur le pourtour du vitrage et qui peuvent être coulissées l'une vers l'autre sur le vitrage W puis reliées l'une à l'autre par des éclisses 9 vissées ou rivetées.

Dans le mode de réalisation de la figure 8, la division du cadre en deux parties s'effectue différemment : ce cadre comporte un rebord arrière 4 analogue à celui des autres modes de réalisation mais séparé de la partie principale du cadre. Après montage du vitrage W dans la partie principale, le rebord 4 peut être fixé sur cette partie principale par des vis ou rivets 10, ce qui permet le maintien du vitrage des deux côtés.

Un vitrage ainsi équipé peut s'appliquer à tous types de véhicules ferroviaires ou routiers et d'une façon générale à tout ensemble utilisant une vitre dont on désire qu'elle soit dans le même plan que la surface l'entourant.

## Revendications

1. Vitrage, notamment pour fenêtre de véhicule ferroviaire ou routier, ce vitrage devant affleurer la surface extérieure de la structure (S) dudit véhicule ou analogue, et comportant un entourage (E) assujetti sur le pourtour dudit vitrage (W), la face extérieure (2) de cet entourage (E) affleurant la surface extérieure (1) du vitrage (W), et cet entourage (E) présentant en outre, s'étendant à l'opposé du vitrage (W), un voile (5) d'appui et de fixation à ladite structure (S), tel qu'après montage ladite face extérieure (2) de cet entourage (E) affleure également ladite surface extérieure (7) de cette structure (S), caractérisé en ce qu'il comporte extérieurement un chanfrein (3) recouvert et maintenu par une partie rentrante (3') dudit entourage (E), sans saillie vers l'extérieur.

2. Vitrage selon la revendication 1, caractérisé en ce que la surface extérieure dudit voile (5) est en affleurement avec la surface extérieure (1) dudit vitrage (W).

3. Vitrage selon la revendication 1, caractérisé en ce que ledit voile (5)est en retrait par rapport à la surface extérieure (1) dudit vitrage (W).

4. Vitrage selon l'une quelconque des revendications précédentes, caractérisé en ce que ledit entourage (E) est réalisé en un matériau composite tel qu'un polyester, un acrylique ou une résine époxy phénolique.

5. Vitrage selon la revendication 4, caractérisé en ce que ledit entourage (E) est renforcé par des fibres de verre.

6. Vitrage selon la revendication 4 ou 5, caractérisé en ce que ledit matériau est surmoulé et adhérisé sur tout le pourtour dudit vitrage (W).

7. Vitrage selon l'une quelconque des revendications 1 à 5, caractérisé en ce que ledit entourage (E), en matériau métallique, synthétique ou naturel, est constitué d'un cadre au moins partiellement préformé, ajusté sur ledit pourtour du vitrage (W).

8. Vitrage selon la revendication 7, caractérisé en ce que ledit entourage (E) est constitué de deux demi-cadres (E1, E2) dont la section transversale correspond, en creux, à la section transversale extérieure dudit pourtour du vitrage (W), ces deux demicadres étant adaptés à être engagés sur ledit pourtour du vitrage (W) par coulissement, et à être ensuite solidarisés l'un de l'autre par des éclisses ou analogues (9).

9. Vitrage selon la revendication 7, caractérisé en ce que ledit entourage (E) comporte une partie principale de cadre entourant d'un côté ledit pourtour du vitrage (W), et un rebord (4) rapporté maintenant le vitrage en place du côté opposé et propre à être fixé, par des boulons, rivets ou analogues (10), sur ladite partie principale de cadre.

10. Vitrage selon l'une quelconque des revendications 7 à 9, caractérisé en ce que ledit entourage (E) est constitué d'un alliage d'aluminium protégé par oxydation anodique ou par peinture.

## Claims

1. Glass pane, in particular for the window of a rail or road vehicle, this glass pane having to fit flush with the outer surface of the structure (S) of said vehicle or similar, and comprising a surround (E) fixed on the perimeter of said glass pane (W), the outer side (2) of this surround (E) fitting flush the outer surface (1) of the glass pane (W), and this surround (E) having in addition, extending to the opposite side of the glass surround (W), a supporting edge (5) for fixing to said structure (S), such that after assembly said outer side (2) of this surround (E) also fits flush with said outer surface (7) of this structure (S) characterized in that it comprises externally a bevelled edge (3) covered and maintained by a reentrant part (3') of said surround (E), without projection towards the outside.

2. Glass pane according to claim 1, characterized in that the outer surface of said edge (5) fits flush with the outer surface (1) of said glass pane (W).

3. Glass pane according to claim 1, characterized in that said edge (5) is set back relative to the outer surface (1) of said glass pane (W).

4. Glass pane according to any one of the preceding claims, characterized in that said surround (E) is made of a composite material such as a polyester, an acrylic or a phenolic epoxy resin.

5. Glass pane according to claim 4, characterized in that said surround (E) is reinforced with glass fibres.

6. Glass pane according to claim 4 or 5, characterized in that said material is duplicate moulded and fitted over the whole of the perimeter of said glass pane (W).

7. Glass surround according to any one of claims 1 to 5, characterized in that said surround (E), of metallic, synthetic or natural material, is constituted by a frame at least partially preformed, set on said perimeter of the glass pane (W).

8. Glass pane according to claim 7, characterized in that said surround (E) is constituted by two half-frames (E1, E2) the transverse section of which corresponds, recessed, to the outer transverse section of said perimeter of the glass pane (W), these two half-frames being adapted so as to be engaged on said perimeter of the glass pane (W) by sliding, and then to be fixed together by cover plates or similar (9).

9. Glass pane according to claim 7, characterized in that said surround (E) comprises a main frame part surrounding on one side said perimeter of the glass pane (W), and an attached rim (4) maintaining the glass pane in place on the opposite side and suitable to be fixed, by bolts, rivets or similar (10), on said main frame part.

10. Glass pane according to any one of claims 7 to 9, characterized in that said surround (E) is constituted by an aluminium alloy protected by anodic oxidation or by painting.

## Patentansprüche

1. Verglasung, insbesondere für Schienen- oder Straßenfahrzeugfenster, wobei die Verglasung mit der Außenoberfläche des Aufbaus (S) des Fahrzeuges oder dergleichen glatt abschließen soll und eine Umrandung (E) aufweist, die an dem Umfang der Verglasung (W) befestigt ist, wobei die Außenfläche (2) dieser Umrandungen (E) glatt mit der Außenfläche (1) der Verglasung (W) abschließt und diese Umrandung (E) außerdem einen sich entgegengesetzt zur Verglasung (W) erstreckenden Flansch (5) zur Anlage und zur Befestigung an dem Aufbau (S) derart aufweist, daß nach der Befestigung die genannte Außenfläche (2) der Umrandung (E) in gleicher Weise glatt mit der Außenoberfläche (7) des Aufbaus (S) abschließt,
dadurch gekennzeichnet, daß die Verglasung auf der Außenseite eine abgeschrägte Kante (3) aufweist, die durch einen vorspringenden Abschnitt (3') der Umrandung (E) abgedeckt und gehalten ist, ohne nach außen vorzuspringen.

2. Verglasung nach Anspruch 1,
dadurch gekennzeichnet, daß die Außenoberfläche des Flansches (5) glatt mit der Außenfläche (1) der Verglasung (W) abschließt.

3. Verglasung nach Anspruch 1,
dadurch gekennzeichnet, daß der Flansch (5) gegenüber der Außenfläche (1) der Verglasung (W) zurückversetzt ist.

4. Verglasung nach einem der vorhergehenden Ansprüche,
dadurch gekennzeichnet, daß die Umrandung (E) aus einem Verbundwerkstoff wie z.B. einem Polyester, einem Acrylmaterial oder einem Phenol-Epoxydharz hergestellt ist.

5. Verglasung nach Anspruch 4,
dadurch gekennzeichnet, daß die Umrandung (E) glasfaserverstärkt ist.

6. Verglasung nach Anspruch 4 oder 5,
dadurch gekennzeichnet, daß das Material auf den gesamten Umfang der Verglasung (W) aufgeformt und zum Anhaften gebracht ist.

7. Verglasung nach einem der Ansprüche 1 bis 5,
dadurch gekennzeichnet, daß die aus einem Metallmaterial, einem Kunststoff- oder natürlichem Material bestehende Umrandung (E) durch einen zumindestens teilweise vorgeformten Rahmen gebildet ist, der an den Umriß der Verglasung (W) angepaßt ist.

8. Verglasung nach Anspruch 7,
dadurch gekennzeichnet, daß die Umrandung (E) durch zwei Halbrahmen (E1,E2) gebildet ist, deren Querschnitt mit Vertiefungen dem äußeren Querschnitt des Umfanges der Verglasung (W) entspricht, wobei die beiden Halbrahmen so ausgebildet sind, daß sie auf dem Umfang der Verglasung (W) durch Aufschieben in Eingriff bringbar sind und daß sie dann miteinander durch Laschen (9) oder dergleichen miteinander verbindbar sind.

9. Verglasung nach Anspruch 7,
dadurch gekennzeichnet, daß die Umrandung (E) einen Rahmenhauptteil, der von einer Seite aus den Umfang der Verglasung (W) umgibt, und eine aufgesetzte Randleiste (4) umfaßt, die die Verglasung von ihrer gegenüberliegenden Seite aus an ihrem Platz hält und durch Schrauben, Nieten oder dergleichen (10) an dem Hauptteil des Rahmens befestigbar ist.

10. Verglasung nach einem der Ansprüche 7-9,
dadurch gekennzeichnet, daß die Umrandung (E) durch eine Aluminiumlegierung gebildet ist, die durch anodische Oxidation oder durch Farbe geschützt ist.
